# EUROPEAN PATENT SPECIFICATION

(11) **EP 2 384 049 B1**
(45) Date of publication and mention of the grant of the patent: **03.10.2012**
(21) Application number: 10305458.1
(22) Date of filing: 29.04.2010
(51) Int. Cl.: H04W 36/00

(54) **Transmission of signalling information to a cluster of terminals moving together**
Übertragung von Signalisierungsinformationen an Endgeräte, die sich zusammen bewegen
Transmission d'informations de signalisation à des terminaux se déplaçant ensemble

(43) Date of publication of application: 02.11.2011
(73) Proprietor: Alcatel Lucent, 75007 Paris (FR)
(72) Inventor: Aziz, Danish, 70435 Stuttgart (DE); Aydin, Osman, 70569 Stuttgart (DE)
(74) Representative: Kleinbub, Oliver

(56) References cited:
- EP-A1- 1 058 473
- WO-A1-2008/044283
- WO-A1-2009/155992

## Description

### Field of the invention

The invention relates to a method for transmission of signaling information between a base station and mobile devices, and a mobile device adapted to perform said method.

### Background

In communication networks, like e.g. communication networks working in accordance with the Third Generation Partnership Project Long Term Evolution (3GPP LTE) standard or with the Worldwide Interoperability for Microwave Access (WiMAX) standard, signalling information is repeatedly transmitted between base stations and mobile devices.

In special cases, like mobile devices which are moving in clusters or groups, as e.g. user terminals or sensors in train or subway scenarios, or in case of a huge amount of sensors in the network, a high amount of signalling resources in uplink and downlink direction between a base station and the mobile devices is required.

### Summary

The above-described scenarios, as the mobility of mobile devices in clusters, could result in ineffective usage of signalling resources in the network, as the same or at least similar content of signalling information must be sent for every mobile device in the cluster e.g. for measurement configuration in downlink or for measurement reporting in uplink. Such scenarios could in the worst case even result in the blocking of resources.

An exemplary scenario is given in the following to highlight the problem.

A group or cluster of mobile devices, as e.g. user terminals, moving from their serving cell to the same target cell at the same time send measurement reports to the serving cell. The useful information content of these reports, as e.g. the target cell ID and the received signal levels from the respective target cell, for the serving cell is almost the same. However, in methods according to the state-of-the-art uplink resources are still allocated to these mobile devices in order to send this redundant information.

In the patent application WO 2009/155992 A1, a method is proposed that involves obtaining mobility management properties for a plurality of terminals served by an access node, as well as grouping the plurality of terminals into groups based on correlating the obtained mobility management properties of the plurality of terminals. Decisions on the necessity for a handover are taken per group and then forwarded per group to a target access node. Also, a corresponding apparatus is proposed.

In the patent application EP 1058473 A1, a group handover mechanism is disclosed in which the signalling overhead is kept to a minimum. Accordingly, the present invention consists of a radio telecommunications system including a base station serving a cell and for communicating with a plurality of mobile stations located within the cell, in which the system further includes among others means for clustering into a group those mobile stations whose monitored characteristic meets a predetermined first criterion, means for monitoring a cell parameter and for detecting when the parameter meets a predetermined second criterion, and means for transmitting a handover signal when the cell parameter meets the second criterion.

The object of the invention is thus to propose a method for transmission of signaling information between a base station and mobile devices with a reduced amount of signalling traffic between the base station and the mobile devices.

The basic idea of the invention is that a clustering of mobile devices is performed which results in a cluster of mobile devices with similar properties, like e.g. similar locations and/or velocities. Having a cluster of user terminals or sensors is the baseline to reduce signalling resources, as signalling to or from said cluster can be interpreted as signaling to or from all mobile devices that belong to said cluster. Hence, uplink or downlink resources can be saved. The object is thus achieved by a method for transmission of signalling information between a base station and mobile devices, wherein the mobile devices exchange information about at least one specifying parameter among each other, the mobile devices define a cluster of mobile devices that have said at least one specifying parameter lying within a predefined range in common, the mobile devices define a subset of the mobile devices belonging to said cluster for transmitting said signalling information, and signalling information transmitted between at least one of the mobile devices belonging to said cluster and the base station are interpreted as signalling information of all mobile devices belonging to said cluster.

The object is furthermore achieved by a mobile device for transmission of signalling information between a base station and the mobile device, wherein the mobile device comprises at least one processing means which is adapted to exchange information with further user terminals about at least one specifying parameter, define a cluster of mobile devices that have said at least one specifying parameter lying within a predefined range in common, and define a subset of the mobile devices belonging to said cluster for transmitting said signalling information, receive information indicating that the mobile device belongs to a cluster of mobile devices comprising at least two mobile devices that have at least one specifying parameter lying within a predefined range in common, and interpret signalling information sent to the cluster of mobile devices using a cluster identifier as signalling information related to itself.

Mobile devices, like sensors, user terminals or so-called MTC devices (MTC = machine type communication), which experience the same or similar radio conditions, as e.g. the same signal strength or signal to interference and noise ratio (SINR), or which are mobile devices of the same type, as e.g. sensors or user terminals, often send or receive the same or similar signalling information. For such mobile devices, it would be sufficient if not all, and preferably only one mobile device, send or receive signaling information which is valid for all mobile devices with the same or similar radio conditions or for all mobile devices of the same type.

For instance, if a group of mobile devices which is located in a certain border area to a neighbor cell that is sending stronger signals than the serving cell, and which are preferably also moving towards the neighbor cell, may all send an event to trigger a handover, as e.g. a so-called event A3 in 3GPP LTE. Thus, it would be sufficient if only one mobile device sends such an event to trigger a handover and the serving cell can carry out handover for all mobile devices belonging to the group.

One of the basic ideas of the invention is thus the setup of a cluster of mobile devices, e.g. sensors with similar properties like location and/or velocities, and thus with similar signaling information transmitted from or to the mobile devices.

One of said properties can be e.g. the location of the mobile devices, which can be determined by means of GPS data (GPS = Global Positioning System) or triangulation performed by three neighboring base stations using the timing advance values of the mobile devices. Other methods for estimation of the location of the mobile devices, as e.g. so-called assisted GPS, can also be used. As the location of the mobile devices can be correlated to the radio conditions, as e.g. signal strength or signal to interference and noise ratio of base stations, the location can be taken as an indirect parameter for triggering transmission of signaling information, as e.g. the transmission of handover messages.

The cluster can also comprise mobile devices that all have a velocity in the same or in a similar direction, i.e. the mobile devices are all heading for the same neighbor cell and thus may all request a handover to the neighbor cell.

A further property of the mobile devices that can be taken as an indication of the location of the mobile devices, and thus of the radio conditions, is the absolute point in time, in a certain small time interval, at which the mobile devices entered the serving cell preferably in combination with information about the last visited cells from history information of the mobile devices. All mobile devices coming from the same neighbour cell and having entered the serving cell in the same small time interval will have very similar locations and thus very similar radio conditions.

Furthermore, the transmission of so-called events A4 from mobile devices in 3GPP LTE, used e.g. for adaptive noise reduction or inter cell interference coordination, can be used for clustering the mobile devices, as an event A4 indicates the signal strength of a neighbour cell in relation to a threshold, and thus indicates the radio condition of the mobile terminals. For instance, all mobile devices sending the same or similar event A4 can be involved in inter cell interference coordination, e.g. by means of reducing transmission power on certain subcarriers. Thus, the mobile devices can be clustered, and signalling information requiring to reduce transmission power on certain subcarriers can be sent to all mobile terminals of the cluster using only one signalling message, e.g. by means of a cluster ID. Generally, based on signalling information as the event A4, a reassignment of radio resources, as transmission power, subcarriers etc., between the serving cell and a neighbour cell can be performed.

It is also possible to cluster mobile devices based on the type of mobile devices, as e.g. sensors or user terminals. Such a clustering can e.g. be based on the so-called UE classes.

A cluster of mobile devices can be setup based on at least one of the above-mentioned parameters. In general, said cluster of mobile devices comprises mobile devices that have at least one specifying parameter lying within a predefined range in common. The combination of different parameter values may increase the cluster reliability.

In order to perform the above-described clustering in a base station, the necessary information, as e.g. the location and the velocity of the mobile devices, are either provided from the mobile devices to the base station, or determined in the base station, e.g. in case of triangulation. Alternatively, the mobile devices can exchange the necessary information among each other, and perform clustering in a self-organized way.

User terminals or sensors belonging to a cluster as described above, e.g. in the case of similar location and mobility of mobile devices, transmit according to the state of the art redundant signalling information, such as multiple RRC measurement reports (RRC = radio resource control) of event A3 in uplink, and thus use network resources inefficiently.

Saving of radio resources, i.e. bandwidth, is achieved by reduction of redundant signalling information received by the serving base station from the group of mobile devices organized in a cluster, e.g. moving from the serving cell to the same target cell, or sent from the serving base station to the mobile devices of the cluster. For instance, the information is redundant for the serving cell in the sense that all the mobile devices in the cluster which need to handover to the target cell send at least the signal level and cell ID of the target cell in the measurement report. Even if only one or a subset of mobile devices in the cluster send the measurement report to the serving base station, this is sufficient for the serving cell to prepare a handover with the target cell for all the mobile devices in the cluster. The serving cell only needs to know which mobile devices are in the cluster that need to handover to the target cell at the same time.

As an example, let a number of n user terminals need to handover from cell A to cell B within a given time span. Cell A will get at least n measurement reports in uplink from all n user terminals based on the so-called event A3, which is an event used for handover described in the technical specification TS 36.331 in 3GPP LTE. All n measurement reports will contain at least the signal level of signals from cell A, the physical cell ID of cell B, and the signal level of signals from cell B.

Generally, the measurement reports contain cell IDs and signal levels of up to 8 detected neighbour cells according to TS 36.331, which will increase the amount of signalling information and thus the required resources in uplink.

According to an embodiment of the invention, it is proposed, that instead of n measurement reports, there can be either only 1 or only x < n measurement reports in uplink in order to initiate a handover of the cluster of n user terminals.

A measurement report containing only the above-mentioned information consist of 7 bytes. With a robust modulation and coding scheme, as e.g. QPSK (QPSK = Quadarture Phase Shift Keying) and a Code Rate of 1/3, one would need 2/3 of a Physical Resource Block (PRB) for 1 measurement report in uplink. In best case with respect to the number of measurement reports, not the content of the measurement reports, one can save [(n-1) *2/3] Physical Resource Blocks (PRBs) in uplink if n user terminals belong to the cluster. One PRB consists of 12 OFDM subcarriers with 15kHz spacing and 14 OFDM symbols (OFDM = Orthogonal Frequency Division Multiplexing).

In an embodiment of the invention, a base station defines the cluster of mobile devices, and also defines a subset of the mobile devices belonging to said cluster for transmitting signalling information. The mobile devices which belong to the subset can e.g. be notified by the base station that they have to transmit the signaling information. Alternatively, in case that clustering is performed in a self-organized way as described above, the mobile devices belonging to the cluster can also perform the definition of the subset in a self-organized way among each other.

The invention is described in the following within the framework of 3GPP LTE, however as the invention is not restricted to 3GPP LTE, but can in principle be applied in other networks that apply exchange of signalling information between a base station and mobile devices, as e.g. in WiMAX networks, in the following, instead of the term eNodeB used in LTE, the more general term base station is used.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily a handover procedure according a first embodiment of the invention.
Fig. 4 schematically shows exemplarily a handover procedure according a second embodiment of the invention.

### Description of the embodiments

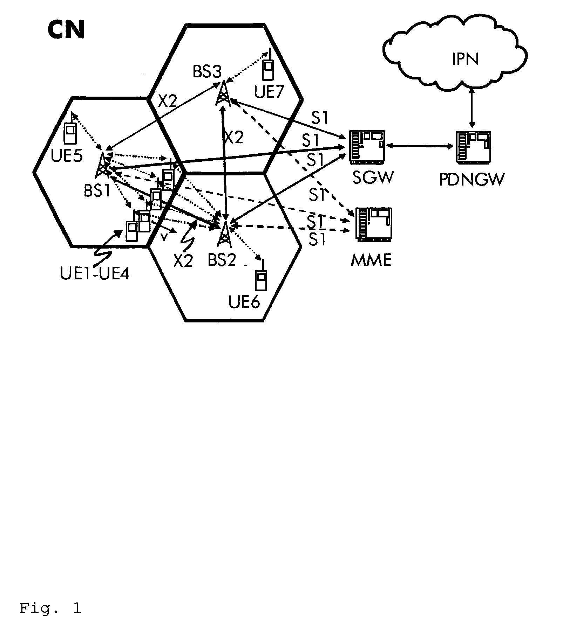

Fig. 1 shows as an example of a communication network in which the invention can be implemented a communication network CN according to the standard 3GPP LTE.

Said communication network CN comprises base stations BS1-BS3, user terminals UE1-UE7, a serving gateway SGW, a packet data network gateway PDNGW, and a mobility management entity MME.

Each of said user terminals UE1-UE7 is connected via radio connections to one or multiple of said base stations BS1-BS3, which is symbolized by dotted double-arrows in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1-UE7 and the respective serving base station BS1-BS3.

The mobility management entity MME performs tasks of the subscriber management and the session management, and also performs the mobility management during handover between different access networks.

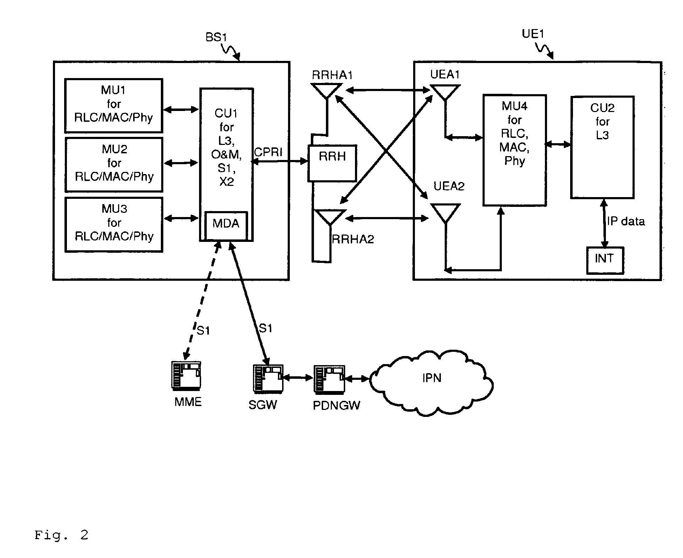

Fig. 2 schematically shows the structure of a user terminal UE1 and a base station BS1 in which the invention can be implemented.

The base station BS1 comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE1 comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board GUI sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE1 to the external IP network IPN.

In the following, two protocol procedures are described as examples for handover procedures according to embodiments of the invention.

The scenarios described below are based on a cell in the LTE network which experiences high load conditions, as e.g. the cell in fig. 1 which is served by the base station BS1. The user terminals UE1-UE4, which are served by the base station BS1, leave the cell with velocity v towards the cell served by the base station BS2 with at least one handover. The user terminals UE1-UE4, which are willing to perform handover to the same cell served by base station BS2 can at the same time be considered and defined as a cluster. This clustering of mobiles can be seen in the public transportation types, like buses, subways or trains, or people leaving stadiums or festivals.

The user terminals UE1-UE4, which are located in a certain predefined border area of the cell served by base station BS1 and which have a direction of velocity within a certain range heading for the neighbour cell served by base station BS2, can be grouped in a cluster having common signalling information. The predefined border area and the range of the direction of the velocity that must be fulfilled in order to have common radio conditions, as e.g. fulfilled handover conditions, can be determined either by means of simulations or by means of measurements.

In an embodiment of the invention, a long distance train scenario with a large number of user terminals moving through more than one cell and probably making many handovers together, can be considered as clustering of user terminals.

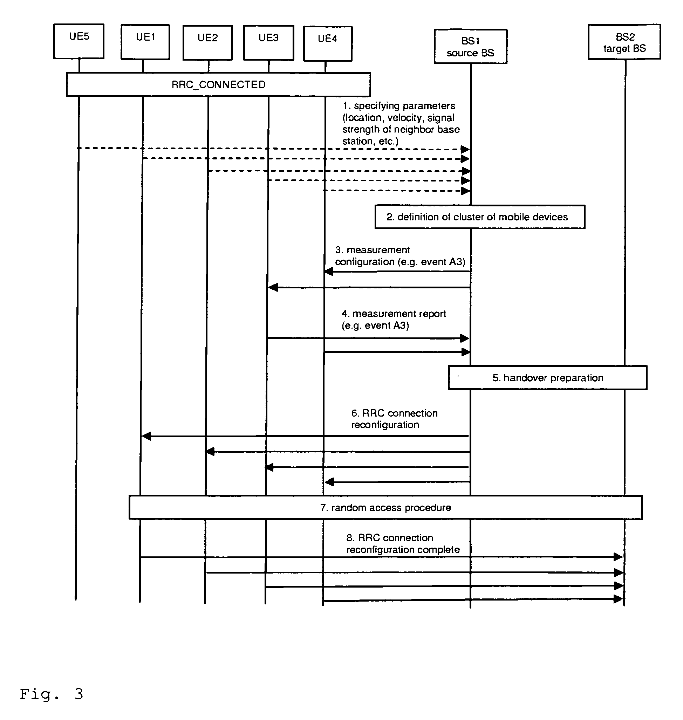

In fig. 3, a protocol procedure for a handover procedure according to a first embodiment of the invention is depicted. The scenario corresponds to the handover of user terminals UE1-UE4 from base station BS1 to base station BS2 as depicted in fig. 1.

In the initial state at the beginning, the user terminals UE1-UE4 are in connected mode (RRC_CONNECTED) and served by the base station BS1.

In signalling messages denoted with 1., the user terminals UE1-UE5, which are served by the base station BS1, send specifying parameters, like e.g. the location of the user terminals, the velocity of the user terminals, received signal strength of neighbour base stations BS2, BS3 etc. to the source base station BS1. However, preferably no explicit signalling of said specifying parameters from the user terminals UE1-UE5 is performed in order to save uplink resources. Instead of an explicit signalling, the base station BS1 uses information that is anyway signalled for other purposes in order to define a cluster of mobile devices as described in the following in step 2. Such information can e.g. be information following from location estimation based on anyway transmitted timing advances (TA), history information of the mobile devices UE1-UE5 stored in the base station BS1, or so-called events A4 transmitted from the user terminals UE1-UE5 e.g. for the purpose of inter cell interference coordination (ICIC). Thus, as step 1. is only optional, the arrows representing the message exchange in fig. 3 are depicted as dashed arrows.

In the next step denoted with 2., the source base station BS1 defines a cluster of mobile devices, i.e. user terminals in this case, based on received or determined specifying parameters. As can be seen in fig. 1, the user terminals UE1-UE4 are all located in a border area to the cell served by base station BS2, and shall all be heading for said cell served by base station BS2. Thus, the source base station BS1 groups the user terminals UE1-UE4 in a cluster of user terminals willing to handover to the target base station BS2. Furthermore, the source base station BS1 defines a subset of user terminals belonging to said cluster for transmitting signalling information. In the example depicted in fig. 3, the user terminals UE3 and UE4 are defined as user terminals which shall transmit signalling information. Alternatively, the specifying parameters are transmitted from the base station BS1 to a device for coordination of self-organization of the network, which is not depicted in fig. 3. Said device for coordination of self-organization of the network can then define the cluster of mobile devices and the subset of user terminals belonging to said cluster for transmitting signalling information as above-described.

In the next step denoted with 3., the source base station BS1 sends signalling messages for measurement configuration to the user terminals UE3 and UE4. Alternatively, the source base station BS1 may also send signalling messages for measurement configuration to all user terminals UE1-UE4 belonging to the cluster. In the example, an event-triggered reporting is configured for reporting, if a neighbour cell becomes better than an offset relative to the serving cell, which corresponds to the event A3 in 3GPP LTE. In another embodiment, another event-trigger reporting can be configured e.g. for reporting if a neighbour cell becomes better than a threshold, which corresponds to the event A4 in 3GPP LTE used e.g. for adaptive noise reduction (ANR) or inter cell interference coordination (ICIC).

In the example, the event A3 is fulfilled for the user terminal UE1-UE4, i.e. the neighbour cell served by base station BS2 becomes better than an offset relative to the serving cell. Thus, the handover condition in this case is fulfilled.

In the next step denoted with 4., the user terminals UE3 and UE4, which have been configured for sending signalling information, send measurement reports to the source base station BS1. In these measurement reports, it is either directly indicated, that event A3 is fulfilled, or alternatively, measurement results for the signal strengths of the serving and neighboring cell, and offsets are reported.

In the next step denoted with 5., the source base station BS1 evaluates the received measurement reports, detects that the condition for handover is fulfilled, and starts a handover preparation phase in coordination with the target base station BS2 e.g. as known in 3GPP LTE. Alternatively, the source base station BS1 already starts the handover preparation phase directly after reception of the first measurement report sent from the user terminal UE3.

In the next step denoted with 6., the source base station BS1 sends an RRC connection reconfiguration message to each of the user terminal UE1-UE4, which order the user terminals UE1-UE4 to perform handover and which include mobility control information, as e.g. the identity of the target cell.

In the next step denoted with 7., the user terminals UE1-UE4 initiate a random access procedure to the target base station BS2 using the received RACH configuration (RACH = random access channel) as described e.g. in 3GPP LTE.

In the next step denoted with 8., upon successful completion of the random access procedure, each of the user terminals UE1-UE4 sends a message to the target base station BS2 indicating that the connection reconfiguration has been completed, i.e. the so-called RRCConnectionReconfigurationComplete message.

In the above-described embodiment, after the cluster is set up, a certain number of user terminals from the cluster are configured with event A3 measurement reporting. Said user terminals UE3, UE4 will then be the representatives of their cluster from radio link quality point of view. Their resulting reports will be used as decision point for all other user terminals in the cluster. A handover command message will be sent by the serving cell to all user terminals in the cluster UE1-UE4 based on only few event A3 measurement reports.

Let n=11 in the equation given above, which means that 11 user terminals formed a cluster which is an appropriate assumption e.g. for a long distance train scenario. If any two user terminals send the measurement reports then in this case, at least [ (n-2) *2/3] PRBs = 6 PRBs = 1.08 MHz can be saved in uplink.

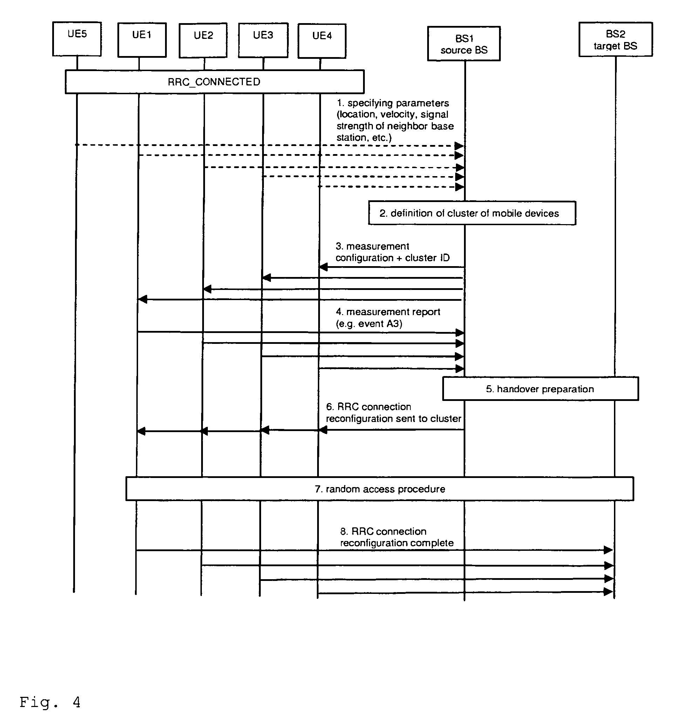

In fig. 4, a protocol procedure for a handover procedure according to a second embodiment of the invention is depicted. The scenario corresponds to the handover of user terminals UE1-UE4 from base station BS1 to base station BS2 as depicted in fig. 1.

In the initial state at the beginning, the user terminals UE1-UE4 are in connected mode (RRC_CONNECTED) and served by the base station BS1.

In signalling messages denoted with 1., the user terminals UE1-UE5, which are served by the base station BS1, send specifying parameters, like e.g. the location of the user terminals, the velocity of the user terminals, received signal strength of neighbour base stations BS2, BS3 etc. to the source base station BS1. However, preferably no explicit signalling of said specifying parameters from the user terminals UE1-UE5 is performed in order to save uplink resources. Instead of an explicit signalling, the base station BS1 uses information that is anyway signalled for other purposes in order to define a cluster of mobile devices as described in the following in step 2. Such information can e.g. be information following from location estimation based on anyway transmitted timing advances (TA), history information of the mobile devices UE1-UE5 stored in the base station BS1, or so-called events A4 transmitted from the user terminals UE1-UE5 e.g. for the purpose of inter cell interference coordination (ICIC). Thus, as step 1. is only optional, the arrows representing the message exchange in fig. 4 are depicted as dashed arrows.

In the next step denoted with 2., the source base station BS1 defines a cluster of mobile devices, i.e. user terminals in this case, based on received or determined specifying parameters. As can be seen in fig. 1, the user terminals UE1-UE4 are all located in a border area to the cell served by base station BS2, and shall all be heading for said cell served by base station BS2. Thus, the source base station BS1 groups the user terminals UE1-UE4 in a cluster of user terminals willing to handover to the target base station BS2. Furthermore, the source base station BS1 defines a subset of user terminals belonging to said cluster for transmitting signalling information. In the example depicted in fig. 4, the user terminals UE3 and UE4 are defined as user terminals which shall transmit signalling information. Additionally, the source base station BS1 assigns a cluster ID to the defined cluster of user terminals UE1-UE4.

In the next step denoted with 3., the source base station BS1 sends signalling messages for measurement configuration to the user terminals UE1-UE4 of the cluster. In the example, an event-triggered reporting is configured for reporting, if a neighbour cell becomes better than an offset relative to the serving cell, which corresponds to the event A3 in 3GPP LTE. In another embodiment, another event-trigger reporting can be configured e.g. for reporting if a neighbour cell becomes better than a threshold, which corresponds to the event A4 in 3GPP LTE used e.g. for adaptive noise reduction (ANR) or inter cell interference coordination (ICIC). Additionally, also the cluster ID is sent to the user terminals UE1-UE4 of the cluster. Alternatively, for mobile devices which already belong to a group or cluster with a common cluster ID, e.g. based on the type of the mobile devices like sensors or MTC devices, only a single signalling messages for measurement configuration can be sent to the already clustered mobile devices, and no additional cluster ID must be assigned in step 3.

In the example, the event A3 is fulfilled for the user terminal UE1-UE4, i.e. the neighbour cell served by base station BS2 becomes better than an offset relative to the serving cell. Thus, the handover condition in this case is fulfilled.

In the next step denoted with 4., the user terminals UE1-UE4 of the cluster, which have been configured for sending signalling information, send measurement reports to the source base station BS1. In these measurement reports, it is either directly indicated, that event A3 is fulfilled, or alternatively, measurement results for the signal strengths of the serving and neighboring cell, and offsets are reported.

In an alternative of the embodiment, only a subset of the user terminals UE1-UE4 of the cluster, e.g. user terminal UE3 and UE4, are configured to send measurement reports in step 3., and thus, only user terminals belonging to said subset, e.g. user terminals UE3 and UE4, send measurement reports in step 4.

In the next step denoted with 5., the source base station BS1 evaluates the received measurement reports, detects that the condition for handover is fulfilled, and starts a handover preparation phase in coordination with the target base station BS2 e.g. as known in 3GPP LTE. Alternatively, the source base station BS1 already starts the handover preparation phase directly after reception of the first measurement report sent from the user terminal UE1.

In the next step denoted with 6., the source base station BS1 sends a single RRC connection reconfiguration message to the cluster using the cluster ID, which orders the user terminals UE1-UE4 of the cluster to perform handover and which includes mobility control information, as e.g. the identity of the target cell.

In the next step denoted with 7., the user terminals UE1-UE4 initiate a random access procedure to the target base station BS2 using the received RACH configuration (RACH = random access channel) as described e.g. in 3GPP LTE.

In the next step denoted with 8., upon successful completion of the random access procedure, each of the user terminals UE1-UE4 sends a message to the target base station BS2 indicating that the connection reconfiguration has been completed, i.e. the so-called RRCConnectionReconfigurationComplete message.

By means of targeting signalling information in downlink to the cluster, e.g. by means of using a cluster ID, downlink resources, i.e. bandwidth can be saved, as only one message must be sent by the serving cell to the cluster of user terminals and thus, redundant information in downlink in reduced.

In variations of the above-described embodiments, all user terminals UE1-UE4 can be configured to report an event A3, and the variability of the time instant of event A3 measurement reports between the user terminals of the cluster. Once the serving cell gets the measurement reports from certain user terminals, e.g. user terminals UE3 and UE5 from the cluster, it will send the handover command to all user terminals UE1-UE4 in the cluster instead of waiting for the individual measurement reports from the user terminals UE1 and UE2. Hence the uplink resources going to be used for reporting event A3 by rest of the cluster will be saved.

In a further embodiment, If cooperative communication between the user terminals is possible, another method can be used to save uplink resources resources. In this case, the serving cell will configure all user terminals to report measurement events as described above. Depending upon the cooperative protocol, only one user terminal or a few user terminals will send the measurement report in uplink. This measurement report will contain the target cell information and all the user terminals which are willing to move to that target cell at that time. The serving cell will then send the handover command to all the user terminals in the cluster. In this case, in the uplink measurement report, also the Ids of the user terminals in the cluster must be reported.

By means of the above-described handover procedures, the amount of signalling information is reduced, as not all the user terminals UE1-UE5 send measurement reports to the source base station BS1, but only the configured user terminals UE3 and UE4.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

## Claims

1. A method for transmission of signalling information between a base station (BS1) and mobile devices (UE1-UE5), wherein
• the mobile devices (UEI-UE5) exchange information about at least one specifying parameter among each other,
• the mobile devices (UE1-UE5) define a cluster of mobile devices (UE1-UE4) that have said at least one specifying parameter lying within a predefined range in common,
• the mobile devices (UE1-UE5) define a subset of the mobile devices (UE3, UE4) belonging to said cluster for transmitting said signalling information,
• and signalling information transmitted between at least one of the mobile devices (UE3, UE4) belonging to said cluster and the base station (BS1) are interpreted as signalling information of all mobile devices (UE1-UE4) belonging to said cluster.

2. A method according to claim 1, wherein said at least one specifying parameter is at least one of the group of location information of the mobile devices (UE1-UE5), velocity of the mobile devices (UE1-UE5), point in time of entrance of the mobile devices (UE1-UE5) in the cell served by the base station (BS1), last visited cell of the mobile devices (UE1-UE5), measurements of the mobile devices (UE1-UE5) about the signal strength of at least one neighboring base station (BS2), history information of the mobile devices (UE1-UE5), and UE classes of the mobile devices (UE1-UE5).

3. A method according to claim 1 or 2, wherein the base station (BS1) defines the cluster of mobile devices (UE1-UE4), and defines a subset of the mobile devices (UE3, UE4) belonging to said cluster for transmitting said signalling information.

4. A method according to claim 1 or 2, wherein the mobile devices (UE1-UE5) transmit information about the at least one specifying parameter to the base station (BS1), the base station (BS1) defines the cluster of mobile devices (UE1-UE4) based on said information, and the base station (BS1) defines a subset of the mobile devices (UE3, UE4) belonging to said cluster for transmitting said signalling information.

5. A method according to claim 1 or 2, wherein the mobile devices (UE1-UE5) transmit information about the at least one specifying parameter via the base station (BS1) to a device for coordination of self-organization of a network, said device for coordination of self-organization of the network defines the cluster of mobile devices (UE1-UE4) based on said information, and defines a subset of the mobile devices (UE3, UE4) belonging to said cluster for transmitting said signalling information.

6. A method according to any of the preceding claims, wherein an event is triggered in the base station (BS1) after reception of said signalling information from the at least one mobile device (UE3, UE4) belonging to said cluster.

7. A method according to any of the preceding claims, wherein said signalling information transmitted from said at least one of the mobile devices (UE3, UE4) belonging to said cluster comprises at least one measurement report of signals from at least one neighbor base station (BS2).

8. A method according to claim 7, wherein based on the at least one measurement report of signals from the at least one neighbor base station (BS2), handover commands are sent to the mobile devices (UE1-UE4) belonging to said cluster.

9. A method according to claim 7, wherein based on the at least one measurement report of signals from the at least one neighbor base station (BS2), a reassignment of radio resources between the base station (BS1) and the at least one neighbor base station (BS2) is performed.

10. A method according to any of the preceding claims, wherein the base station (BS1) sends said signalling information to the mobile devices (UE1-UE4) belonging to said cluster in a single signalling message in order to configure said mobile devices (UE1-UE4) belonging to said cluster.

11. A method according to any of the preceding claims, wherein the base station (BS1) sends said signalling information to the mobile devices (UE1-UE4) belonging to said cluster using a cluster identifier.

12. A mobile device (UE1) for transmission of signalling information between a base station (BS1) and the mobile device (UE1), wherein the mobile device (UE1) comprises at least one processing means which is adapted to,
• exchange information with further user terminals (UE2-UE5) about at least one specifying parameter, define a cluster of mobile devices (UE1-UE4) that have said at least one specifying parameter lying within a predefined range in common, and define a subset of the mobile devices (UE3, UE4) belonging to said cluster for transmitting said signalling information,
• receive information indicating that the mobile device (UE1) belongs to a cluster of mobile devices (UE1-UE4) comprising at least two mobile devices that have at least one specifying parameter lying within a predefined range in common,
• and interpret signalling information sent to the cluster of mobile devices (UE1-UE4) using a cluster identifier as signalling information related to itself.

13. A communication network (CN) comprising at least one mobile device (UE1) according to claim 12.

## Patentansprüche

1. Verfahren zur Übertragung von Signalisierungsinformationen zwischen einer Basisstation (BS1) und mobilen Geräten (UE1-UE5), wobei
• die mobilen Geräte (UE1-UE5) Informationen über mindestens einen spezifizierenden Parameter untereinander austauschen,
• die mobilen Geräte (UE1-UE5) eine Gruppe von mobilen Geräten (UE1-UE4) definierten, welche gemeinsam den besagten mindestens einen spezifizierenden Parameter, der innerhalb eines vordefinierten Bereiches liegt, aufweisen,
• die mobilen Geräte (UE1-UE5) eine Teilmenge von mobilen Geräten (UE3, UE4), welche der besagten Gruppe angehören, für die Übertragung der besagten Signalisierungsinformationen definierten,
• und Signalisierungsinformationen, die zwischen mindestens einem der mobilen Geräte (UE3, UE4), welche der besagten Gruppe angehören, und der Basisstation (BS1) übertragen werden, als Signalisierungsinformationen aller der besagten Gruppe angehörenden mobilen Geräte (UE1-UE4) interpretiert werden.

2. Verfahren nach Anspruch 1, wobei der besagte mindestens eine spezifizierende Parameter mindestens einer der Gruppe bestehend aus Standortinformationen der mobilen Geräte (UE1-UE5), Geschwindigkeit der mobilen Geräte (UE1-UE5), Zeitpunkt des Eintritts der mobilen Geräte (UE1-UE5) in die von der Basisstation (BS1) versorgte Zelle, der von den mobilen Geräten (UE1-UE5) zuletzt besuchten Zelle, Messgrößen der mobilen Geräte (UE1-UE5) in Bezug auf die Signalstärke mindestens einer benachbarten Basisstation (BS2), Verlaufsinformationen der mobilen Geräte (UE1-UE5) und UE-Klassen der mobilen Geräte (UE1-UE5) ist.

3. Verfahren nach Anspruch 1 oder 2, wobei die Basisstation (BS1) die Gruppe von mobilen Geräten (UE1-UE4) definiert, und eine Teilmenge von mobilen Geräten (UE3, UE4), welche der besagten Gruppe für die Übertragung der besagten Signalisierungsinformationen angehören, definiert.

4. Verfahren nach Anspruch 1 oder 2, wobei die mobilen Geräte (UE1-UE5) Informationen über den mindestens einen spezifizierenden Parameter an die Basisstation (BS1) übertragen, die Basisstation (BS1) die Gruppe von mobilen Geräten (UE1-UE4) auf der Basis der besagten Informationen definiert, und die Basisstation (BS1) eine Teilmenge der mobilen Geräte (UE3, UE4), welche der besagten Gruppe für die Übertragung der besagten Signalisierungsinformationen angehören, definiert.

5. Verfahren nach Anspruch 1 oder 2, wobei die mobilen Geräte (UE1-UE5) Informationen über den mindestens einen spezifizierenden Parameter über die Basisstation (BS1) an ein Gerät für die Koordination der Selbstorganisation eines Netzwerks übertragen, wobei das besagte Gerät für die Koordination der Selbstorganisation des Netzwerks die Gruppe von mobilen Geräten (UE1-UE4) auf der Basis der besagten Informationen definiert, und eine Teilmenge der mobilen Geräte (UE3, UE4) welche der besagten Gruppe angehören, zur Übertragung der besagten Signalisierungsinformationen definiert.

6. Verfahren nach einem beliebigen der vorstehenden Ansprüche, wobei nach Empfang der besagten Signalisierungsinformationen von dem mindestens einen mobilen Gerät (UE3, UE4), welches der besagten Gruppe angehört, ein Ereignis in der Basisstation (BS1) ausgelöst wird.

7. Verfahren nach einem beliebigen der vorstehenden Ansprüche, wobei die besagten von dem besagten mindestens einen der mobilen Geräte (UE3, UE4), welche der besagten Gruppe angehören, übertragenen Signalisierungsinformationen mindestens einen Messbericht der Signale von mindestens einer benachbarten Basisstation (BS2) umfassen.

8. Verfahren nach Anspruch 7, wobei, basierend auf dem mindestens einen Messbericht der Signale von der mindestens einen benachbarten Basisstation (BS2), Handover-Befehle an die mobilen Geräte (UE1-UE4), welche der besagten Gruppe angehören, gesendet werden.

9. Verfahren nach Anspruch 7, wobei, basierend auf dem mindestens einen Messbericht der Signale von der mindestens einen benachbarten Basisstation (BS2), eine Neuzuordnung von Funkressourcen zwischen der Basisstation (BS1) und der mindestens einen benachbarten Basisstation (BS2) durchgeführt wird.

10. Verfahren nach einem beliebigen der vorstehenden Ansprüche, wobei die Basisstation (BS1) Signalisierungsinformationen an die mobilen Geräte (UE1-UE4), welche der besagten Gruppe angehören, in einer einzelnen Signalisierungsnachricht sendet, um die besagten mobilen Geräte (UE1-UE4), welche der besagten Gruppe angehören, zu konfigurieren.

11. Verfahren nach einem beliebigen der vorstehenden Ansprüche, wobei die Basisstation (BS1) die besagten Signalisierungsinformationen unter Verwendung einer Gruppenkennung an die mobilen Geräte (UE1-UE4), welche der besagten Gruppe angehören, sendet.

12. Mobiles Gerät (UE1) für die Übertragung von Signalisierungsinformationen zwischen einer Basisstation (BS1) und dem mobilen Gerät (UE1), wobei das mobile Gerät (UE1) mindestens ein Verarbeitungsmittel umfasst, welches für das Durchrühren der folgenden Schritte ausgelegt ist:
• Austauschen von Informationen über mindestens einen spezifizierenden Parameter mit weiteren Benutzerendgeräten (UE2- UE5), Definieren einer Gruppe von mobilen Geräten (UE1-UE4), welche gemeinsam den besagten mindestens einen spezifizierenden Parameter, der innerhalb eines vordefinierten Bereiches liegt, aufweisen, und Definieren einer Teilmenge von mobilen Geräten (UE3, UE4), welche der besagten Gruppe angehören, für die Übertragung der besagten Signalisierungsinformationen,
• Empfangen von Informationen, welche angeben, dass das mobile Gerät (UE1) einer Gruppe von mobilen Geräten (UE1-UE4) mit mindestens zwei mobilen Geräten, die gemeinsam mindestens einen spezifizierenden Parameter, der innerhalb eines vordefinierten Bereiches liegt, aufweisen, angehört,
• und Interpretieren der unter Verwendung einer Gruppenkennung an die Gruppe von mobilen Geräten (UE1-UE4) gesendeten Signalisierungsinformationen als sich auf sich selbst beziehende Signalisierungsinformationen.

13. Kommunikationsnetzwerk (CN) mit mindestens einen mobilen Gerät (UE1) gemäß Anspruch 12.

## Revendications

1. Procédé de transmission d'informations de signalisation entre une station de base (BS1) et des dispositifs mobiles (UE1-UE5), dans lequel
• les dispositifs mobiles (UE1-UE5) échangent entre eux des informations sur au moins un paramètre de spécification,
• les dispositifs mobiles (UE1-UE5) définissent un groupe de dispositifs mobiles (UE1-UE4) qui ont en commun ledit au moins un paramètre de spécification situé dans une plage prédéfinie,
• les dispositifs mobiles (UE1-UE5) définissent un sous-ensemble des dispositifs mobiles (UE3, UE4) appartenant audit groupe pour transmettre lesdites informations de signalisation,
• et les informations de signalisation transmises entre au moins l'un des dispositifs mobiles (UE3, UE4) appartenant audit groupe et la station de base (BS1) sont interprétées comme des informations de signalisation de tous les dispositifs mobiles (UE1-UE4) appartenant audit groupe.

2. Procédé selon la revendication 1, dans lequel ledit au moins un paramètre de spécification est au moins l'un des groupes d'informations sur l'emplacement des dispositifs mobiles (UE1-UE5), la vitesse des dispositifs mobiles (UE1-UE5), l'instant donné de l'entrée des dispositifs mobiles (UE1-UE5) dans la cellule desservie par la station de base (BS1), la dernière cellule visitée des dispositifs mobiles (UE1-UE5), les mesures des dispositifs mobiles (UE1-UE5) relatives à l'intensité du signal d'au moins une station de base voisine (BS2), les informations d'historique des dispositifs mobiles (UE1-UE5), et les classes d'UE des dispositifs mobiles (UE1-UE5).

3. Procédé selon la revendication 1 ou 2, dans lequel la station de base (BS1) définit le groupe de dispositifs mobiles (UE1-UE4), et définit un sous-ensemble des dispositifs mobiles (UE3, UE4) appartenant audit groupe pour transmettre lesdites informations de signalisation.

4. Procédé selon la revendication 1 ou 2, dans lequel les dispositifs mobiles (UE1-UE5) transmettent des informations sur le au moins un paramètre de spécification à la station de base (BS1), la station de base (BS1) définit le groupe de dispositifs mobiles (UE1-UE4) sur la base desdites informations, et la station de base (BS1) définit un sous-ensemble des dispositifs mobiles (UE3, UE4) appartenant audit groupe pour transmettre lesdites informations de signalisation.

5. Procédé selon la revendication 1 ou 2, dans lequel les dispositifs mobiles (UE1-UE5) transmettent des informations sur le au moins un paramètre de spécification via la station de base (BS1) à un dispositif de coordination d'auto-organisation d'un réseau, ledit dispositif de coordination d'auto-organisation du réseau définit le groupe de dispositifs mobiles (UE1-UE4) sur la base desdites informatisons, et définit un sous-ensemble des dispositifs mobiles (UE3, UE4) appartenant audit groupe pour transmettre lesdites informations de signalisation.

6. Procédé selon l'une quelconque des revendications précédentes, dans lequel un événement est déclenché dans la station de base (BS1) après la déception desdites informations de signalisation provenant du au moins un dispositif mobile (UE3, UE4) appartenant audit groupe.

7. Procédé selon l'une quelconque des revendications précédentes, dans lequel lesdites informations de signalisation transmises depuis ledit au moins l'un des dispositifs mobiles (UE3, UE4) appartenant audit groupe comprend au moins un rapport de mesure de signaux provenant d'au moins une station de base voisine (BS2).

8. Procédé selon la revendication 7, dans lequel sur la base du au moins un rapport de mesure de signaux provenant de la au moins une station de base avoisine (BS2), des commandes de transfert sont envoyées aux dispositifs mobiles (UE1-UE4) appartenant audit groupe.

9. Procédé selon la revendication 7, dans lequel sur la base du au moins un rapport de mesure de signaux provenant de la au moins une station de base voisine (BS2), une réaffectation de ressources radioélectriques entre la station de base (BS1) et la au moins une station de base voisine (BS2) est effectuée.

10. Procédé selon l'une quelconque des revendications précédentes, dans lequel la station de base (BS1) envoie lesdites informations de signalisation aux dispositifs mobiles (UE1-UE4) appartenant audit groupe dans un message de signalisation unique afin de configurer lesdits dispositifs mobiles (UE1-UE4) appartenant audit groupe.

11. Procédé selon l'une quelconque des revendications précédentes, dans lequel la station de base (BS1) envoie lesdites informations de signalisation aux dispositifs mobiles (UE1-UE4) appartenant audit groupe en utilisant un identifiant de groupe.

12. Dispositif mobile (UE1) de transmission d'informations de signalisation entre une station de base (BS1) et le dispositif mobile (UE1), dans lequel le dispositif mobile (UE1) comprend au moins un moyen de traitement qui est adapté pour,
• échanger des informatisons avec d'autres terminaux utilisateur (UE2- UE5) sur au moins un paramètre de spécification, définir un groupe de dispositifs mobiles (UE1-UE4) qui ont en commun ledit au moins un paramètre de spécification situé dans une plage prédéfinie, et définir un sous-ensemble des dispositifs mobiles (UE3, UE4) appartenant audit groupe pour transmettre lesdites informations de signalisation,
• recevoir des informations indiquant que le dispositif mobile (UE1) appartient à un groupe de dispositifs mobiles (UE1-UE4) comprenant au moins deux dispositifs mobiles qui ont en commun au moins un paramètre de spécification situé dans une plage prédéfinie,
• et interpréter les informations de signalisation envoyées au groupe de dispositifs mobiles (UE1-UE4) comme des informations de signalisation en rapport avec lui-même en utilisant un identifiant de groupe.

13. Réseau de communication (CN), comprenant au moins un dispositif mobile (UE1) selon la revendication 12.
